# EUROPÄISCHE PATENTSCHRIFT

(11) **EP 0 963 698 B1**
(45) Veröffentlichungstag und Bekanntmachung des Hinweises auf die Patenterteilung: **28.08.2002**
(21) Anmeldenummer: 98110373.2
(22) Anmeldetag: 05.06.1998
(51) Int. Cl.: A22C 11/10, B65B 51/04

(54) **Vorrichtung zum Abteilen von Abschnitten einer gefüllten Verpackungshülle**
Device for dividing a stuffed casing
Dispositif pour diviser un tube d'emballage rempli en unités

(43) Veröffentlichungstag der Anmeldung: 15.12.1999
(73) Patentinhaber: Tipper Tie technopack GmbH, D-21509 Glinde (DE)
(72) Erfinder: Plewa, Manfred, Dipl.-Ing., 27283 Verden (DE); Müller, Eckehart, 25421 Pinnenberg (DE)
(74) Vertreter: Glawe, Delfs, Moll & Partner

(56) Entgegenhaltungen:
- DE-A- 2 344 226
- DE-A- 2 550 042
- FR-A- 1 349 273
- FR-A- 1 557 553
- US-A- 4 675 945

## Beschreibung

Die Erfindung betrifft eine Vorrichtung zum Abteilen von Abschnitten einer gefüllten Verpackungshülle durch Einschnüren der Verpackungshülle und Anbringen wenigstens einer Verschlußklammer auf dem eingeschnürten Bereich, mit wenigstens einem Paar von jeweils an einem Betätigungshebel angeordneten Verdrängerblechen.

Bei der Herstellung von Würsten im Strangverfahren wird Wurstbrät aus einem Füllrohr in eine Verpackungshülle (Schlauch oder Darm) gefüllt. Der gefüllte Schlauch muß in bestimmten Abständen eingeschnürt bzw. gerafft und mit Verschlußklammern versehen werden. Das Aufbringen der Verschlußklammern erfolgt nach dem Raffen mittels eines Stempels. In der Regel müssen an einer Verschlußstelle zwei Klammern hintereinander angebracht werden, da auf das zu verschließende Ende einer vorlaufenden Wurst der ebenfalls zu verschließende Anfang einer nachlaufenden Wurst folgt.

Zu diesem Zweck ist es aus DE-A 23 44 226 und DE-A 25 50 042 bekannt, zwei Paare von Verdrängerblechen vorzusehen, die während des Einschnürvorgangs zunächst in Axialrichtung (der Wursthülle) dicht benachbart sind, nach dem Einschnüren in ihrer Schließstellung aber axial gespreizt werden und so einen im wesentlichen füllgutfreien Längenabschnitt der Wursthülle schaffen, auf den zwei Verschlußklammern gesetzt werden können.

FR-A 1 349 273 offenbart ebenfalls eine Raffeinrichtung für gefüllte Verpackungshüllen, bei der zwei Verdrängerscheren in gleicher Weise wie in DE-A 25 50 042 aufeinander zu bewegt werden.

Problematisch dabei ist, daß in dem Verschlußbereich zunächst eine dicke Wursthülle eingefüllt werden muß, die erst nach dem Raffen durch die Verdrängerbleche eine Querschnittsverengung im Verschlußbereich erfährt. In der genannten Druckschrift ist daher bereits vorgeschlagen worden, Teile der Klammerverschlußeinrichtung (die Matrize) beweglich auszubilden, so daß sie zunächst aus dem Querschnittsbereich der Wursthülle herausgeführt werden kann und erst nach dem Raffen in eine Stellung gebracht wird, in der das Setzen der Klammern erfolgt.

Die Zufuhr von Verschlußklammern erfolgt aus einem Magazin, das die Klammern von der Seite her in die Klammerführungsbahn einführt, in der sie vom Stempel erfaßt und auf die Matrize gepreßt werden können. Um Platz für dieses seitliche Einführen zu schaffen, muß im Stand der Technik gemäß DE-A-23 44 226 der Betätigungshebel jedes Verdrängerbleches eines Paars auf einer separaten Achse angeordnet werden. Dies ist aufwendig.

Der Erfindung liegt die Aufgabe zugrunde, eine Vorrichtung der eingangs genannten Art zu schaffen, die konstruktiv ein facher aufgebaut ist und bei der Platz für eine seitliche Klammerzuführung in die Verschlußklammerführungsbahn vorhanden ist.

Die Erfindung löst diese Aufgabe dadurch, daß beim Schließen eines Verdrängerblechpaars ein Verdrängerblech dieses Paars von seinem zugehörigen Betätigungshebel mit einer Schubkraft und das zweite Verdrängerblech von seinem zugehörigen Betätigungshebel mit einer Zugkraft beaufschlagt wird.

Zunächst seien einige im Rahmen der Erfindung verwendete Begriffe erläutert.

Unter einem Verdrängerblechpaar ist jede Anordnung von Blechen, Scheren oder dergleichen zu verstehen, die relativ zueinander quer zur Axialrichtung der zu verschließenden schlauchförmigen Verpackungshülle verschieblich sind und beim Verschieben von einer Öffnungs- in eine Schließstellung den von ihnen eingeschlossenen freien Querschnitt sukzessive vermindern und so die Verpackungshülle raffen bzw. einschnüren.

Die Verdrängerbleche weisen jeweils einen Betätigungshebel auf. Dieser Begriff bezeichnet die kraftbeaufschlagenden Organe, mittels denen die Bleche bewegt werden. Üblicherweise ist jeder Hebel um eine Achse verschwenkbar und wird pneumatisch, von einer Kurvensteuerung oder dergleichen betätigt. Ein Verdrängerblech und der zugehörige Betätigungshebel können einstückig miteinander verbunden sein, also ein einziges Bauteil bilden.

Ein gegensinniges Bewegen der Betätigungshebel eines Verdrängerblechpaars fährt die zugehörigen Verdrängerbleche von der Öffnungs- in die Schließstellung und umgekehrt.

Erfindungsgemäß ist nun vorgesehen, daß beim Schließvorgang eines Verdrängerblechpaars ein Blech von seinem zugehörigen Betätigungshebel mit einer Schubkraft und das zweite Blech mit einer Zugkraft beaufschlagt wird. Beaufschlagen mit einer Schubkraft bedeutet, daß der Kraftangriff durch den Betätigungshebel in Bewegungsrichtung hinter der zu raffenden Wursthülle (deren Mittelpunkt) erfolgt, dieser Betätigungshebel also beim Einschnürvorgang eine Schwenkbewegung auf die Verpackungshülle zu ausführt. Beaufschlagung mit einer Zugkraft bedeutet, daß der Kraftangriff durch den Betätigungshebel in Bewegungsrichtung bei dem Schließvorgang hinter der Verpackungshülle erfolgt, der entsprechende Betätigungshebel also dabei von der Verpackungshülle wegschwenkt.

Im Gegensatz dazu werden im Stand der Technik gemäß DE-A-23 44 226 beide Verdrängerbleche von ihren zugehörigen Hebeln mit einer Schubkraft beaufschlagt.

Der besondere Vorteil der Erfindung liegt darin, daß die Betätigungshebel für beide Verdrängerbleche eines Paars in der Radialebene der Verpackungshülle betrachtet auf einer Seite dieser Verpackungshülle angeordnet werden können, im Bereich der anderen Seite verbleibt so genügend Freiraum, der beispielsweise zur Zuführung von Verschlußklammern mittels eines Magazins genutzt werden kann.

Bei einer besonders vorteilhaften Ausführungsform der Erfindung sind alle Betätigungshebel um eine gemeinsame Achse verschwenkbar. Es verbleibt bei dieser Anordnung genügend Freiraum für die Verschlußklammerzuführung.

Vorzugsweise sind zwei Verdrängerblechpaare vorgesehen, die relativ zueinander in Axialrichtung (der Verpackungshülle) verschieblich sind. Beide Paare werden zunächst axial dicht benachbart angeordnet, die Wursthülle wird gerafft, anschließend wird durch axiales Auseinanderziehen der beiden Paare ein im wesentlichen füllgutfreier Zopf gebildet, auf dem die Verschlußklammern gesetzt werden können.

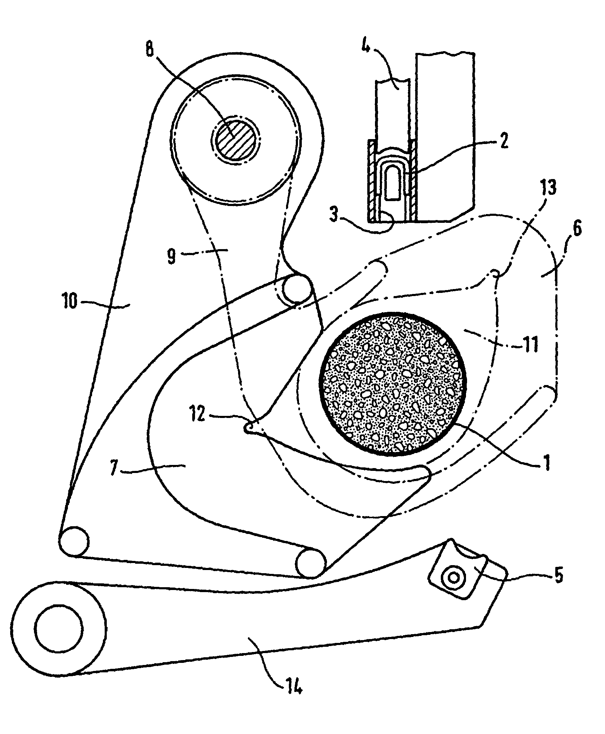

Eine Ausführungsform der Erfindung wird im folgenden anhand der einzigen Zeichnung beschrieben. Diese zeigt schematisch einen Schnitt durch eine erfindungsgemäße Vorrichtung in einer Radialebene der langgestreckten Verpackungshülle.

Eine mit Wurstbrät gefüllte Wursthülle 1 soll eingeschnürt und an der Einschnürung mit einem oder zwei Clips 2 versehen werden, die in einer Verschlußklammer- bzw. Clipführung 3 bereitstehen und mittels eines Stempels 4, der von einem nicht dargestellten pneumatischen Zylinder betätigt wird, gegen eine Matrize 5 gepreßt werden können. Die Clipzufuhr ist in der Zeichnung nicht dargestellt, sie erfolgt senkrecht zur Papierebene von der Seite der Clipführung 3 her aus einem Magazin.

Zum Raffen bzw. Einschnüren der Verpackungshülle 1 sind Verdrängerbleche 6, 7 vorgesehen, die von um eine gemeinsame Achse 8 schwenkbaren Betätigungshebeln 9, 10 betätigt werden. Das in der Zeichnung strichpunktiert dargestellte Verdrängerblech 6 und der zugehörige Betätigungshebel 9 liegt in Axialrichtung der Wursthülle 1 gesehen hinter dem Verdrängerblech 7 mit dem entsprechenden Betätigungshebel 10. Die beiden Verdrängerbleche 6, 7 sind axial einander so dicht benachbart, daß sie beim Verschwenken der zugehörigen Betätigungshebel 9, 10 um die Achse 8 scherenartig aneinander vorbeigleiten.

Um der Klarheit willen ist in der Zeichnung das zweite Verdrängerscherenpaar, das gegenüber dem ersten Verdrängerscherenpaar 6, 7 axial verschieblich ist, nicht dargestellt.

Die Zeichnung zeigt das Verdrängerscherenpaar 6, 7 in seiner Öffnungsstellung. Die Arbeitsweise der Vorrichtung ist wie folgt:

Von der gefüllten Wursthülle 1 wird ein gewünschter Längenabschnitt durch die von den Verdrängerblechen 6, 7 eingeschlossene Öffnung 11 hindurchgeschoben. Anschließend wird der Betätigungshebel 10 um die Achse 8 so verschwenkt, daß der Zwickel (die engste Stelle) 12 des Verdrängerblechs 7 in Richtung auf den Mittelpunkt der Wursthülle 1 zubewegt wird. Der Betätigungshebel 9 wird gleichzeitig um den gleichen Winkel gegensinnig verschwenkt, so daß der Zwickel 13 des Verdrängerblechs 6 ebenfalls auf den Mittelpunkt der Wursthülle 1 zuwandert. Der Antrieb und die Steuerung der Betätigungshebel 9, 10 erfolgt über in der Zeichnung nicht dargestellte Organe, vorzugsweise über eine Kurvensteuerung.

Man erkennt, daß bei dieser Schließbewegung das Verdrängerblech 6 von seinem zugehörigen Betätigungshebel 9 gezogen und das Verdrängerblech 7 von dem Hebel 10 geschoben wird. Der Bereich, in dem der Clip 2 in Wartestellung sitzt, bleibt aufgrund der erfindungsgemäßen Anordnung der Betätigungshebel während der Schwenkbewegung frei.

Durch die Schließbewegung der Verdrängerbleche 6, 7 verringert sich der lichte Querschnitt der von ihnen eingeschlossenen Öffnung 11, so daß die Wursthülle 1 eingeschnürt wird. In der Schließstellung liegen die Zwickel 12, 13 der Verdrängerbleche 6, 7 einander dicht benachbart etwa im Mittelpunkt der Wursthülle 1 und haben so einen im wesentlichen füllgutfreien Abschnitt gebildet. Diese Schließbewegung wird gleichzeitig von dem in der Zeichnung nicht dargestellten zweiten Verdrängerblechpaar vollzogen.

Die beiden Verdrängerblechpaare werden im nächsten Schritt axial auseinandergeschoben, so daß sie durch Verdrängung des Wurstbräts zwischen sich einen im wesentlichen füllgutfreien Zopf bilden. Der Hebel 14 wird jetzt nach oben geschwenkt, so daß die Matrize 5 in den Bereich des gerafften Zopfs zu liegen kommt. Durch Betätigen des Stempels 4 werden auf diesen Zopf zwei Verschlußklammern oder Clipse 2 gesetzt. Durch eine in der Zeichnung nicht dargestellte Schneidvorrichtung wird der Zopf zwischen den beiden Clipsen durchtrennt, die fertige und verschlossene Wurst wird aus der Maschine entnommen.

Die technischen Details des Clipverschlußmechanismus sind dem Fachmann geläufig und bedürfen hier keiner weiteren Erläuterung. Beispielhaft sei auf die DE-A-1 461 873 verwiesen, die einen solchen Mechanismus erläutert.

## Patentansprüche

1. Vorrichtung zum Abteilen von Abschnitten einer gefüllten Verpackungshülle durch Einschnüren der Verpackungshülle (1) und Anbringen wenigstens einer Verschlußklammer (2) auf dem eingeschnürten Bereich, mit wenigstens einem Paar von jeweils an einem Betätigungshebel (9,10) angeordneten Verdrängerblechen (6,7), **dadurch gekennzeichnet, daß** beim Schließen eines Verdrängerblechpaars ein Verdrängerblech (7) dieses Paars von seinem zugehörigen Betätigungshebel (10) mit einer Schubkraft und das zweite Verdrängerblech (6) von seinem zugehörigen Betätigungshebel (9) mit einer Zugkraft beaufschlagt wird.

2. Vorrichtung nach Anspruch 1, **dadurch gekennzeichnet, daß** alle Betätigungshebel (9,10) um eine gemeinsame Achse (8) verschwenkbar sind.

3. Vorrichtung nach Anspruch 2, **dadurch gekennzeichnet, daß** das Schließen eines Verdrängerblechpaars (6,7) durch gegensinniges Verschwenken der zugehörigen Betätigungshebel (9,10) erfolgt.

4. Vorrichtung nach einem der Ansprüche 1 bis 3, **dadurch gekennzeichnet, daß** zwei Verdrängerblechpaare vorgesehen sind, die relativ zueinander in Axialrichtung verschieblich sind.

## Claims

1. An apparatus for dividing sections of a filled packaging casing by constricting the packaging casing (1) and applying to the constricted zone at least one sealing clip (2), having at least one pair of displacer plates (6,7) arranged on a respective actuating lever (9,10), **characterised in that** upon closing one pair of displacer plates one displacer plate (7) of this pair is acted upon by its associated actuating lever (10) with a shear force and the second displacer plate (6) is actuated by its associated actuating lever (9) with a tensile force.

2. An apparatus according to Claim 1, **characterised in that** all the actuating levers (9,10) are pivotable about a common axis (8).

3. An apparatus according to Claim 2, **characterised in that** the closing of one pair of displacer plates (6,7) is effected by pivoting the associated actuating levers (9,10) in opposite directions.

4. An apparatus according to any one of Claims 1 to 3, **characterised in that** two pairs of displacer plates are provided, which are displaceable relative to one another in the axial direction.

## Revendications

1. Dispositif pour séparer des sections d'une enveloppe d'emballage remplie, par étranglement de l'enveloppe d'emballage (1) et mise en place d'au moins une agrafe de fermeture (2) sur la zone étranglée, comportant au moins une paire de tôles de refoulement (6, 7), disposées chacune sur un levier d'actionnement (9, 10), **caractérisé en ce que** lorsqu'on ferme une paire de tôles de refoulement, une tôle de refoulement (7) de cette paire est soumise à une force de poussée par son levier d'actionnement (10) correspondant et la deuxième tôle de refoulement (6) est soumise à une force de traction par son levier d'actionnement (9) correspondant.

2. Dispositif selon la revendication 1, **caractérisé en ce que** tous les leviers d'actionnement (9, 10) peuvent pivoter autour d'un axe commun (8).

3. Dispositif selon la revendication 2, **caractérisé en ce que** la fermeture d'une paire de tôles de refoulement (6, 7) s'effectue par pivotement en sens contraire des leviers d'actionnement (9, 10) correspondants.

4. Dispositif selon l'une des revendications 1 à 3, **caractérisé en ce que** sont prévues deux paires de tôle de refoulement qui peuvent coulisser l'une par rapport à l'autre dans la direction axiale.
